# FASCICULE DE BREVET EUROPEEN

(11) **EP 3 224 976 B1**
(45) Date de publication et mention de la délivrance du brevet: **02.01.2019**
(21) Numéro de dépôt: 15801778.0
(22) Date de dépôt: 26.11.2015
(51) Int. Cl.: H04L 12/46, H04L 29/08, H04L 29/06, H04L 1/00, H04L 1/24, H04L 12/40, H04L 12/26

(54) **PROCÉDÉ DE VÉRIFICATION D'INTÉGRITÉ DE TRANSMISSION DE DONNÉES ENTRE UNE UNITÉ AMONT PRINCIPALE ET UNE UNITÉ AVAL PRINCIPALE**
VERFAHREN ZUR VERIFIZIERUNG DER INTEGRITÄT VON DATENÜBERTRAGUNGEN ZWISCHEN EINER UPSTREAM-HAUPTEINHEIT UND EINER DOWNSTREAM-HAUPTEINHEIT
METHOD FOR VERIFYING THE INTEGRITY OF DATA TRANSMISSION BETWEEN A MAIN UPSTREAM UNIT AND A MAIN DOWNSTREAM UNIT

(30) Priorité: 27.11.2014 FR 1461569
(43) Date de publication de la demande: 04.10.2017
(73) Titulaire: Safran Electronics & Defense, 92100 Boulogne-Billancourt (FR)
(72) Inventeur: VANDENBAVIERE, Yann, 92100 Boulogne Billancourt (FR); TUZI, Christophe, 92100 Boulogne-Billancourt (FR); GALLAY, Olivier, 92100 Boulogne-Billancourt (FR); LHENORET, Sébastien, 92100 Boulogne-billancourt (FR)
(74) Mandataire: Regimbeau
(86) Numéro de dépôt international: PCT/EP2015/077748
(87) Numéro de publication internationale: WO 2016/083494

(56) Documents cités:
- WO-A2-2014/199070
- US-A1- 2007 164 166

## Description

### DOMAINE TECHNIQUE GENERAL

La présente invention concerne les commandes de vol électriques, et en particulier un procédé de vérification d'intégrité de transmission de données entre une unité amont principale et une unité aval principale.

### ETAT DE L'ART

Les commandes de vol électriques sont une évolution des commandes de vol traditionnelles mécaniques.

L'apparition de calculateurs numériques rapides a permis une étape supplémentaire d'informatisation des commandes de vol dans laquelle le pilote se contente d'imposer le mouvement global de l'aéronef et laisse au calculateur le soin de commander les mouvements de gouvernes nécessaires en fonction de l'altitude, de la vitesse, etc. On trouve aujourd'hui de nombreux avions « tout numérique » dont les commandes sont entièrement contrôlées par un calculateur.

Jusqu'à présent, très peu d'hélicoptères sont pilotés par des commandes de vol électriques, et aucun avec des commandes de vol électriques sur plateforme tout numérique.

En effet, la propulsion d'un hélicoptère est bien plus complexe que celle d'un avion. L'hélicoptère se déplace au moyen de deux rotors, qui assurent à la fois la portance et la propulsion. Alors que sur l'avion, ces deux fonctions sont découplées (ce qui permet une traction sur un seul axe), l'hélicoptère ne peut se mouvoir dans une seule direction, mais est toujours confronté à six degrés de liberté. Toute modification de l'orientation des pales des rotors influe à la fois sur la traction, la portance, la traînée, la puissance et l'effet rotatif de l'appareil sur lui-même, et les deux rotors doivent compenser leurs influences respectives.

Pour le développement d'une telle plateforme, qu'elle soit basée sur une architecture triplex ou quadruplex (pour la redondance), il est nécessaire d'imaginer des liens de communication entre toutes les unités de calcul du système, avec des performances supérieures à tout ce qui se fait actuellement.

L'application étant très critique (intégrité à 10⁻¹⁰ et disponibilité à 10⁻¹⁰), ces liens de communication doivent aussi nécessairement être fiables, sécurisés, et tolérant aux environnements sévères (notamment foudre).

De plus, dans un système avionique (a fortiori hélicoptère), le poids est primordial et notamment le poids de câblage. Il est donc important de réduire au maximum le nombre de liens externes à chaque calculateur.

Enfin, le volume d'information et le besoin global en performance du système de commande de vol étant sans cesse croissants, il est nécessaire que ces liens de communication offrent des débits importants et des latences faibles, que l'offre existante ne propose pas.

Le bus informatique le plus répandu à ce jour est ARINC-429. Toutefois, il souffre d'un certain nombre défauts : son débit est nettement insuffisant (100 kbits/s, alors qu'il en faudrait au moins 15 Mbits/s), et sa tenue à l'environnement (notamment foudre) est mauvaise. Le bus 1553 présente les mêmes problèmes.

Pour remédier à ces difficultés, il a été proposé l'architecture AFDX (Avionics Full DupleX switched ethernet) qui est un réseau Ethernet redondant et fiabilisé. Le débit, la tenue à l'environnement et la fiabilité sont acceptables, mais il est particulièrement couteux et sa latence est bien plus mauvaise que celle d'ARINC-429
Il serait souhaitable de disposer d'une liaison de données, fiable, sécurisée, immune aux environnements sévères (notamment foudre et susceptibilité conduite), ne nécessitant pas de redondance de câblage, à un coût inférieur à une liaison ARINC-429, avec des débits d'au moins 15Mbit/s et une latence inférieure à 50µs, et étant compatible avec des équipements de test et mise au point du commerce.

US2007164166 divulgue la transmission de commande entre un contrôleur et un actionneur dans un avion: afin de déterminer si la commande a été transmise avec succès, l'actionneur renvoie la commande reçue au contrôleur. L'utilisation d'un CRC pour vérifier la succès de la transmission est aussi proposée.

### PRESENTATION DE L'INVENTION

Selon un premier aspect, la présente invention se rapporte donc à un procédé de vérification d'intégrité de transmission de données entre une unité amont principale et une unité aval principale, le procédé étant caractérisé en ce qu'il comprend la mise en oeuvre d'étapes de :
(a) Génération par un module de traitement de données de l'unité amont principale d'une première trame comprenant un paquet de données à transmettre et un code de redondance cyclique dudit paquet, et transmission à un module d'interface de l'unité amont principale ;
(b) Encapsulation par ledit module d'interface de l'unité amont principale de la première trame dans une seconde trame comprenant en outre un code de redondance cyclique de la première trame ;
(c) Transmission de la seconde trame à des modules d'interface de l'unité aval principale et d'au moins une unité amont auxiliaire ;
(d) Extraction de la première trame depuis la seconde trame par les modules d'interface de l'unité aval principale et de l'au moins une unité amont auxiliaire ; et transmission à des modules de traitement de données de l'unité aval principale et de l'au moins une unité amont auxiliaire ;
(e) Extraction du paquet depuis la première trame par le module de traitement de données de l'unité aval principale ; et extraction du code de redondance cyclique du paquet par le module de traitement de données de l'au moins une unité amont auxiliaire ;
(f) Encapsulation par ledit module d'interface de l'unité amont principale du code de redondance cyclique du paquet dans une troisième trame ;
(g) Transmission de la troisième trame au module d'interface de l'au moins une unité amont auxiliaire ;
(h) Extraction du code de redondance cyclique du paquet depuis la troisième trame par le module d'interface de l'au moins une unité amont auxiliaire ; et transmission au module de traitement de données de l'au moins une unité amont auxiliaire ;
(i) Comparaison par le module de traitement de données de l'au moins une unité amont auxiliaire de chacun des codes de redondance cyclique extraits de la première trame et de la troisième trame ; et confirmation de l'intégrité de la transmission de données à l'unité aval principale seulement si la comparaison est positive.

Selon d'autres caractéristiques avantageuses et non limitatives :
- l'étape (c) comprend également la transmission de la seconde trame au module d'interface d'au moins une unité aval auxiliaire ; l'étape (d) comprend l'extraction de la première trame depuis la seconde trame par le module d'interface de l'au moins une unité aval auxiliaire et la transmission à un module de traitement de données de l'au moins une unité aval auxiliaire ; et l'étape (e) comprend l'extraction du paquet depuis la première trame par le module de traitement de données de l'au moins une unité aval auxiliaire ;
- le procédé comprend une étape supplémentaire (j) de transmission du paquet extrait par le module de traitement de données de l'au moins une unité aval auxiliaire au module de traitement de données de l'unité aval principale ; de comparaison par le module de traitement de données de l'unité aval principale de chacun des paquets reçus, et de confirmation de l'intégrité de la transmission de données à l'unité aval principale seulement si la comparaison est positive ;
- le paquet à transmettre est un premier paquet, généré par le module de traitement de données de l'unité amont principale à partir de données de commande, l'étape (e) comprenant l'extraction du paquet depuis la première trame par le module de traitement de données de l'au moins une unité amont auxiliaire ; et le procédé comprenant en outre la génération par le module de traitement de données de l'au moins une unité amont auxiliaire d'un deuxième paquet à partir des mêmes données de commande que le premier paquet ; la comparaison par le module de traitement de données de l'au moins une unité amont auxiliaire du premier paquet et du deuxième paquet ; et la confirmation de l'intégrité de la transmission de données à l'unité aval principale seulement si la comparaison est positive

- le procédé comprend la mise en oeuvre d'étapes de :
   (α) Génération par le module de traitement de données de l'au moins une unité amont auxiliaire d'une quatrième trame comprenant le deuxième paquet et un code de redondance cyclique dudit deuxième paquet, et transmission au module d'interface de l'au moins une unité amont auxiliaire ;
   (β) Encapsulation par ledit module d'interface de l'au moins une unité amont auxiliaire de la quatrième trame dans une cinquième trame comprenant en outre un code de redondance cyclique de la quatrième trame ;
   (γ) Transmission de la cinquième trame au modules d'interface de l'unité amont principale ;
   (δ) Extraction de la quatrième trame depuis la cinquième trame par le module d'interface de l'unité amont principale, et transmission au module de traitement de données de l'unité amont principale ;
   (ε) Extraction du deuxième paquet depuis la quatrième trame par le module de traitement de données de l'unité amont principale ;
   (ζ) Comparaison par le module de traitement de données de l'unité amont principale du premier paquet et du deuxième paquet ; et confirmation de l'intégrité de la transmission de données à l'unité aval principale seulement si la comparaison est positive.
- les deuxième et troisième trames sont conformes au standard High-Level Data Link Control ;
- les unités amont et les unités aval sont physiquement connectées via une unique liaison filaire ;
- ladite liaison filaire est conforme au standard RS-485.

Selon un deuxième aspect, l'invention concerne un calculateur de vol comprenant une unité amont principale, une unité aval principale et au moins une unité amont auxiliaire, les unités étant configurées pour mettre en oeuvre le procédé selon le premier aspect.

Selon un troisième aspect, l'invention propose un système de contrôle de vol d'un aéronef, comprenant au moins trois calculateurs selon le deuxième aspect, les unités amont des calculateurs recevant des données de commande de vol depuis au moins un organe de pilotage de l'aéronef, et les unités aval des calculateurs fournissant des instructions de contrôle à au moins un actuateur de l'aéronef.

Selon d'autres caractéristiques avantageuses et non limitatives :
- chaque unité amont d'un calculateur est connectée aux unités aval des autres calculateurs.

Selon un quatrième et un cinquième aspect, l'invention concerne un produit programme d'ordinateur comprenant des instructions de code pour l'exécution d'un procédé selon le premier aspect de l'invention de vérification d'intégrité de transmission de données entre une unité amont principale et une unité aval principale ; et des moyens de stockage lisibles par un équipement informatique sur lesquels un produit programme d'ordinateur comprend des instructions de code pour l'exécution d'un procédé selon le premier aspect de l'invention de vérification d'intégrité de transmission de données entre une unité amont principale et une unité aval principale.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente une architecture de système de contrôle de vol dans laquelle est mis en oeuvre le procédé selon l'invention ;
- la figure 2 est un schéma d'un exemple de trame HDLC utilisée par le procédé selon l'invention ;
- Les figures 3a-h illustrent les étapes d'un aspect vérification d'intégrité de transmission de données d'un mode de réalisation préféré du procédé selon l'invention ;
- Les figures 4a-f illustrent les étapes d'un aspect vérification d'intégrité des données générées d'un mode de réalisation préféré du procédé selon l'invention.

### DESCRIPTION DETAILLEE

### Architecture

ARINC-429 évoqué précédemment est une norme qui décrit à la fois une architecture, une interface électrique et un protocole pour véhiculer des données numériques. Il est basé sur une liaison « simplex », c'est-à-dire une liaison unidirectionnelle 1-vers-N, qui va être triplée ou quadruplée (de sorte à obtenir des architectures « triplex » ou « quadruplex »). Ainsi, quand bien même N-1 liaisons seraient défaillantes le système fonctionnerait.

Le présent procédé vise à utiliser d'une façon simple et suffisamment sécurisée des interfaces physiques et protocoles autres que ceux d'ARINC-429 tout en conservant sa topologie, de sorte à garder les avantages d'ARINC-429 tout en améliorant ses performances, en particulier en termes de débit, latence et résistance à l'environnement.

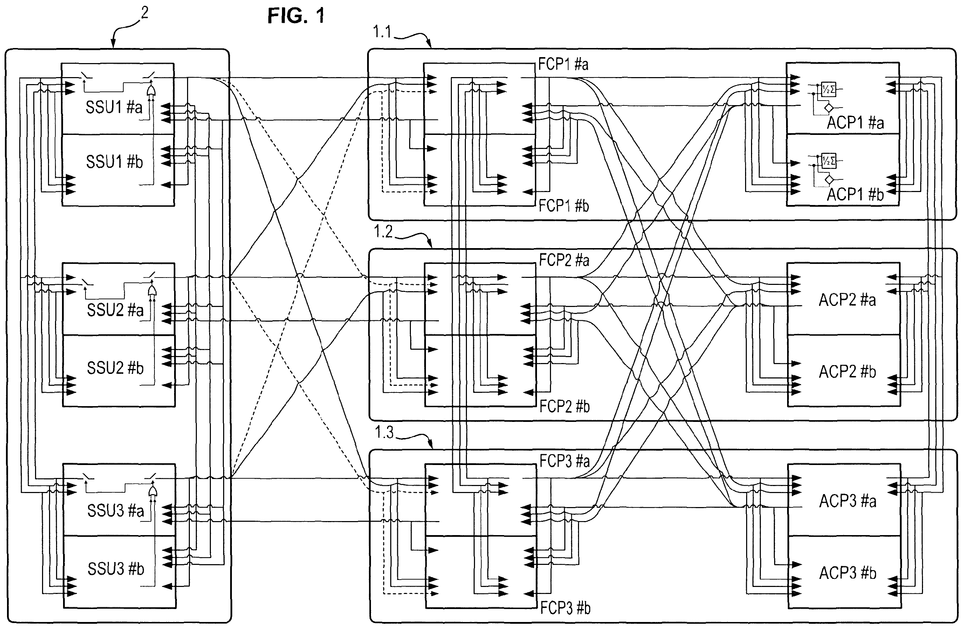

En référence à la figure 1, le présent procédé est mis en oeuvre dans un système de type FCS (« Flight Control System ») d'un aéronef (en particulier un hélicoptère), comprenant un ou plusieurs calculateurs 1 (redondants) FCC (« Flight Control Calculator »). Chaque calculateur peut être vu comme une « ligne » de transmission de commandes de vol du pilote aux gouvernes aérodynamiques, c'est-à-dire les divers éléments de l'aéronef qui permettent de modifier sa trajectoire, entraînés par des actionneurs. Le pilote agit sur des organes de pilotage (manche par exemple) générant des données de commandes de vol injectées par un module 2 (SSU, « Side Stick Unit », c'est-à-dire une unité minimanche, ce dernier désignant une manette permettant d'actionner les gouvernes de l'aéronef) dans les lignes 1.

La figure 1 représente en particulier une architecture triplex avec une première ligne 1.1, une deuxième ligne 1.2, et une troisième ligne 1.3. Les lignes sont identiques.

Par « ligne », on entend un ensemble autonome d'une pluralité d'unités 10, 20 interconnectées, dont au moins une unité « amont » 10 (FCP, « Flight Control Processor ») et au moins une unité « aval » 20 (ACP, « Actuator Control Processor »).

Chaque unité amont 10 reçoit en entrée les données de commandes de vol (traduisant le mouvement global de l'aéronef souhaité par le pilote) et génère des données de contrôle de vol (traduisant les actions à mettre en oeuvre au niveau des organes de l'aéronef) qui transitent dans l'aéronef. Chaque unité aval 20 (distante, située au niveau des actuateurs) reçoit ces données de contrôle de vol et génère des instructions de contrôle des actuateurs de sorte à déplacer activement les gouvernes (par exemple augmentation de l'incidence des pâles du rotor anti-couple si le pilote veut modifier l'orientation de l'hélicoptère).

Au sein d'une ligne, les unités 10, 20 sont dédoublées selon une architecture COM/MON (« COMmand, MONitoring »). En particulier, on trouve une unité amont principale 10a et au moins une unité amont auxiliaire 10b. De façon similaire on peut trouver (comme représenté sur la figure 1 et les suivantes) une unité aval principale 20a et au moins une unité aval auxiliaire 20b. Les unités principales 10a, 20a sont des unités maîtres, alors que les unités auxiliaires 10b, 20b recevant des copies des données reçues par les unités principales 10a, 20a et utilisées uniquement pour surveiller et vérifier les données fournies par les unités principales 10a, 20a.

Chaque unité 10a, 10b, 20a, 20b comprend un module de traitement de données 11a, 11b, 21a, 21b (typiquement un processeur, qui met en oeuvre du traitement de données) et un module d'interface 12a, 12b, 22a, 22b (typiquement un FPGA, « Field-Programmable Gate Array », qui gère les communications avec les autres unités). Les deux modules peuvent être reliées par un lien de communication local.

Dans la suite de la présente description, on prendra l'exemple d'une ligne 1 à quatre unités 10a, 10b, 20a, 20b : une unité amont principale 10a, une unité amont auxiliaire 10b, une unité aval principale 20a, et une unité aval auxiliaire 20b. Comme l'on va voir, les lignes 1 sont spécifiques en ce qu'un unique lien physique (un seul câblage) relie les unités amont 10 aux unités aval 20, ce qui permet de réduire sensiblement le poids et le coût. Le présent procédé permet, malgré ce câblage unique, de garantir l'intégrité de transmission de données au sein d'une ligne 1. En d'autres termes, il est possible de garantir avec un taux d'erreur inférieur à 10⁻¹⁰ que les données transmises de l'unité amont principale 10a à l'unité aval principale 20a sont valides.

Il est à noter, comme représenté sur la figure 1, qu'il reste possible de prévoir des câblages transversaux d'une ligne 1.1, 1.2, 1.3 à une autre (de sorte à permettre un fonctionnement ininterrompu de chaque ligne 1 quand bien même le câblage inhérent à une ligne aurait été physiquement endommagé, par exemple par des tirs si l'aéronef est militaire). Même avec ces câblages transversaux, le nombre de liens physiques à prévoir reste bien plus faible que dans l'art antérieur.

Les interfaces physiques (hardware) au sein d'une ligne 1 sont de façon préférée conforme au standard RS-485 (dont le débit peut atteindre plusieurs Mbits/s), et avantageusement équipées d'isolations galvaniques qui lui permettent une tenue complète à la foudre et aux incidents électromagnétiques (et ainsi une excellente résistance à l'environnement). Bien que RS-485 ne soit pas dédié aux commandes de vol électriques, le présent procédé permet de garantir une fiabilité totale.

### Vérification d'intégrité de transmission de données

Le présent procédé permet de s'assurer qu'un paquet P1 produit par le module de traitement de données 11a de l'unité amont principale 10a est transmis à l'identique au module de traitement de données 21a de l'unité aval principale 20a. L'aspect du procédé qui va être à présent décrit prend pour acquis que le paquet P1 est correctement généré par le module de traitement de données 11a (à partir des données de commande de vol). Toutefois, comme il sera expliqué plus loin, dans un mode de réalisation optionnel le procédé comprend une vérification de l'intégrité des données générées par le module de traitement de données 11a (et donc du paquet P1).

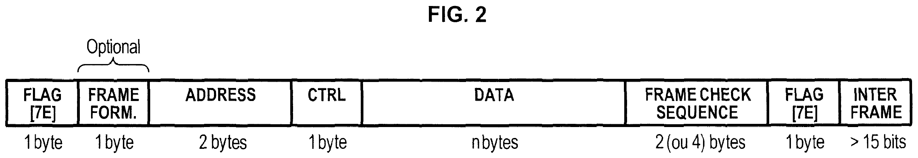

Le protocole utilisé pour la transmission des données (entre unités amont 10 et aval 20, i.e. entre modules d'interface 12, 22 - il est à noter que n'importe quel format peut être utilisé pour les transmissions entre le module de traitement et le module d'interface au sein d'une même unité) est avantageusement conforme au standard HDLC (« High-Level Data Link Control », norme ISO/IEC 13239:2002). L'unité utilisée est la trame (« Frame »), avec une structure telle qu'on la voit sur la **figure 2****.** Chaque trame est délimitée par deux fanions (« flag ») identiques, et comprend un champ de données (« data ») de 20 à 32 octets. Le champ d'adresse est utilisé comme identifiant de message sur 2 octets et est équivalent au « label » d'ARINC-429. Le champ de contrôle de 1 octet n'est pas utilisé. Entre deux trames on trouve au moins 15 bits de valeur « 1 ». Les trames qui seront concernées dans le présent procédé sont la deuxième trame T2, la troisième trame T3, et l'éventuelle cinquième trame T5.

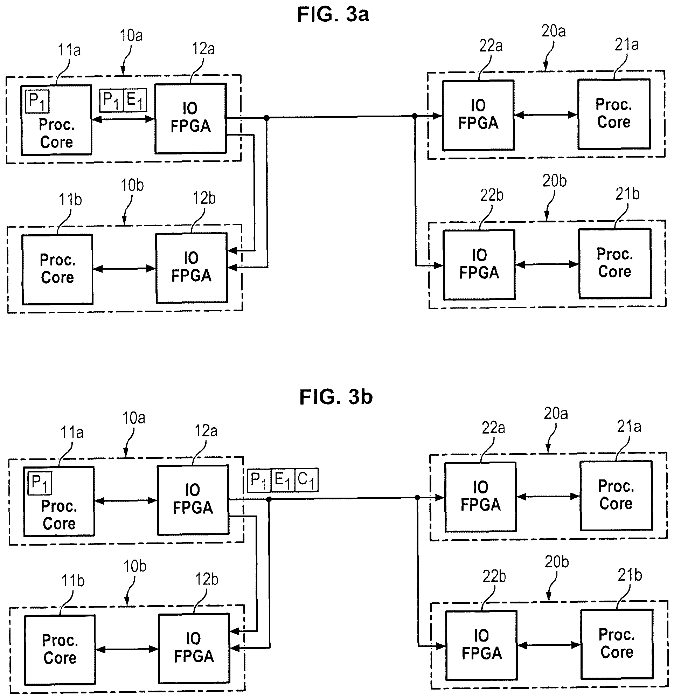

Le procédé commence par une étape (a) illustrée par la **figure 3a** de génération par le module de traitement de données 11a de l'unité amont principale 10a d'une première trame T1 (dans n'importe quel format) comprenant un paquet P1 de données à transmettre et un code de redondance cyclique E1 dudit paquet P1. On a donc T1=P1+E1. Le code de redondance cyclique E1 (couramment appelé « checksum ») du paquet P1 est obtenu par un Code de Redondance Cyclique (CRC), en particulier grâce à une procédure de hachage connue. L'homme du métier pourra mettre en oeuvre un CRC-16-CCITT sur 2 octets. Cette trame T1 est transmise en particulier via un lien de communication local au module d'interface 12a de l'unité amont principale 10a.

Dans une étape (b) illustrée par la **figure 3b****,** ce module d'interface 12a encapsule la première trame T1 dans une seconde trame T2 (laquelle est cette fois avantageusement conforme au format de la figure 2 décrit précédemment) comprenant en outre un code de redondance cyclique C1 de la première trame T1. En d'autres termes, le champ de données de la deuxième trame T2 est composé du paquet P1 et du CRC E1 associé. Le CRC C1 peut être du même type que le CRC E1 ou par exemple un CRC-32-IEEE sur 4 octets.

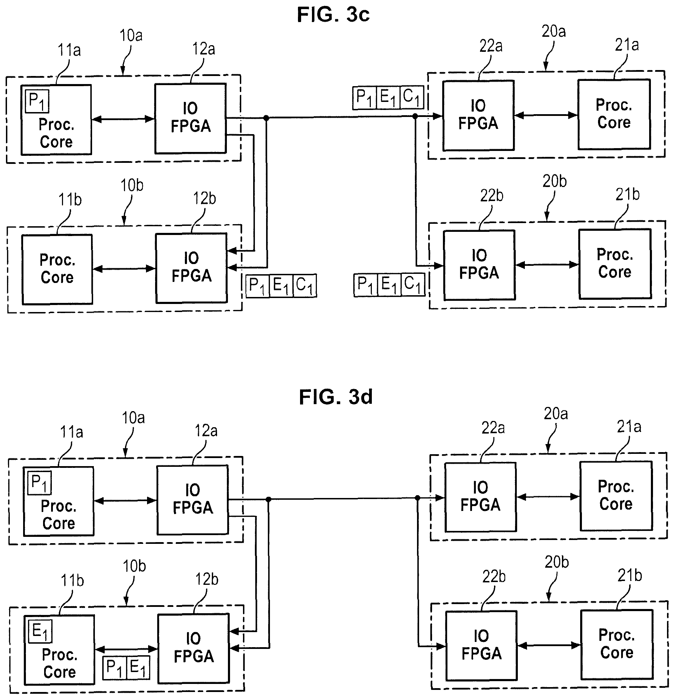

Dans une étape (c) illustrée par la **figure 3c****,** la seconde trame T2 est transmise (via le câblage) au moins au module d'interface 22a de l'unité aval principale 20a et au module d'interface 12b de l'unité amont auxiliaire 10b. En cas de présence d'au moins une unité aval auxiliaire 20b (comme dans l'exemple), la seconde trame T2 est également transmise à son module d'interface 22b.

Chaque module d'interface 22a, 22b, 12b extrait dans une étape (d) la première trame T1 depuis la seconde trame T2 (en isolant l'identifiant de la trame et le CRC C1) et la transmet aux modules de traitement de données 21a, 21b, 11b associés.

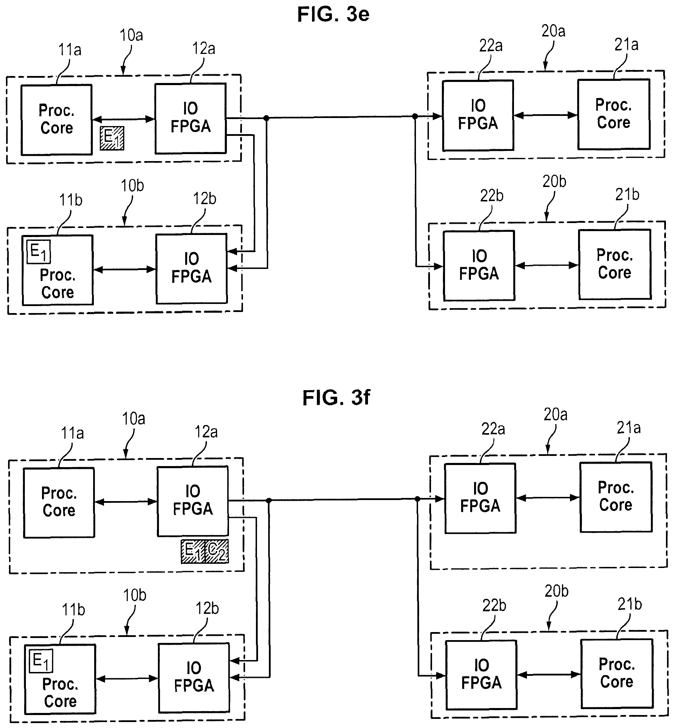

Le module de traitement de données 11b de l'unité amont auxiliaire 10b extrait alors dans une étape (e) représentée par la **figure 3d** le code de redondance cyclique E1 du paquet P1, alors que le module de traitement de données 21a de l'unité aval principale 20a (et le cas échéant le module de traitement de données 21b d'une unité aval auxiliaire 20b) extrait le paquet P1 depuis la première trame T1. On remarque que de façon paradoxale le module de traitement de données 11b de l'unité amont auxiliaire 10b peut ignorer le paquet P1 et ne s'intéresser qu'au code de redondance cyclique E1 du paquet P1 (contrairement à ce qui se passe du coté aval), dans la mesure où comme l'on va voir cela va permettre à l'unité amont auxiliaire 10b de mettre en oeuvre le test d'intégrité de transmission. Le prédicat est que dans la mesure où le câblage est unique, si l'unité amont auxiliaire 10b a correctement reçu le code de redondance cyclique E1 du paquet P1 alors on peut supposer que c'est également le cas du paquet P1 puisque le CRC est une empreinte de P1, et ce pour tous les destinataires. En effet si une erreur a lieu au moment de l'envoi (au niveau du module d'interface 12a) ou avant (au niveau du module de traitement de données 11a), alors toutes les transmissions de E1 seront fausses. Des tests complémentaires seront toutefois mis en oeuvre dans des modes de réalisations qui seront décrits plus loin. A ce stade, illustré par la **figure 3e****,** chacun des modules de traitement de données 11a, 11b amont dispose d'une version du CRC E1.

Ainsi, dans une étape (f) représentée par la **figure 3f****,** le module d'interface 12a de l'unité amont principale 10a encapsule cette fois le code de redondance cyclique E1 du paquet P1 (qui lui est fourni par le module de traitement de données 11a) dans une troisième trame T3. En d'autres termes, le champ de données de la trame T3 ne contient pas P1 (et en pratique ne contient que E1). Cette troisième trame comprend en outre un code de redondance cyclique C1' du code de redondance cyclique E1 du paquet P1 (de façon similaire au CRC C1). Il est à noter que les CRC C1 et C1' sont différents puisque les données hachées ne sont pas les mêmes.

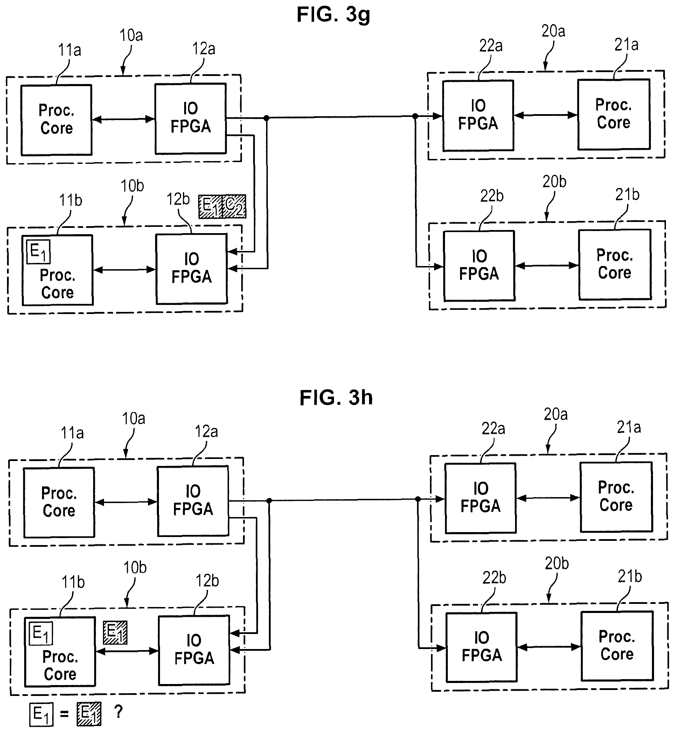

Dans une étape (g) illustrée par la **figure 3g****,** la troisième trame T3 est transmise (via le câblage) au module d'interface 12b de l'unité amont auxiliaire 10b (les unités aval 20a, 20b n'en sont pas destinataires).

De façon similaire à ce qui s'est fait dans l'étape (d), le module d'interface 12b extrait dans une étape (h) le CRC E1 depuis la troisième trame T3 (en isolant l'identifiant de la trame et le CRC C1') et la transmet au module de traitement de données 11b associé.

Ce dernier dispose alors des deux versions du CRC E1 (celui extrait de la première trame T1 et celui extrait de la troisième trame T3) et peut les comparer (bit par bit) dans une étape (i) représentée par la **figure 3h****.** L'intégrité de la transmission de données à l'unité aval principale 20a est confirmée seulement si la comparaison est positive, en d'autres termes que les deux E1 sont identiques, ce qui est signe que chacune des transmissions des deuxième et troisième trames T2, T3 s'est bien déroulée (sinon au moins un des deux CRC serait différent). A ce stade, le module de traitement de données 21a de l'unité aval principale 20a peut être sûr que le paquet P1 a été transmis sans erreur.

Il est à noter que dans le cas d'au moins une unité aval auxiliaire 20b, le procédé peut comprendre une étape supplémentaire (j) de transmission du paquet P1 extrait par le module de traitement de données 21b de l'unité aval auxiliaire 20b au module de traitement de données 21a de l'unité aval principale 20a. Comme dans l'étape (i), sont comparés par le module de traitement de données 11b de l'au moins une unité amont auxiliaire 10b chacun des paquets P1 reçus, l'intégrité de la transmission de données à l'unité aval principale 20a étant confirmée seulement si la comparaison est positive, en d'autres termes que les deux P1 sont identiques, ce qui est signe que chacune des désencapsulations « aval » de la deuxième trame T2 s'est bien déroulée (sinon au moins un des deux P1 serait différent).

### Vérification d'intégrité des données générées

Les étapes décrites précédemment permettent de s'assurer qu'un paquet P1 est convenablement transmis, mais pas que ce paquet P1 est correct. Selon un mode de réalisation préféré le procédé comprend des étapes de vérification (simple voire double) de vérification d'intégrité des données générées par le module de traitement de données 11a de l'unité amont principale 10a (à partir de données de commande).

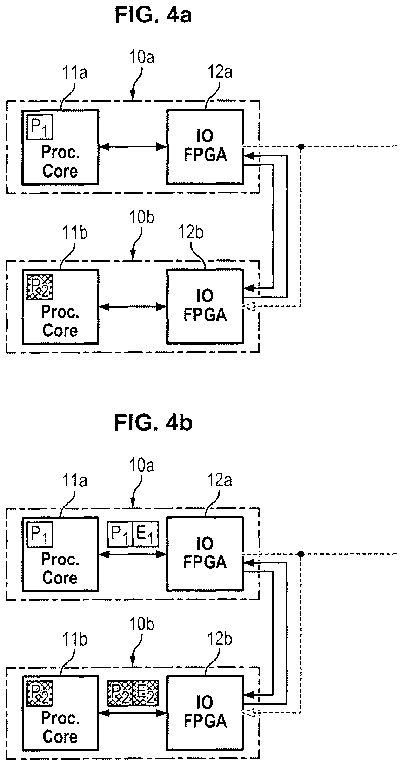

Pour cela, on désigne le paquet P1 à transmettre comme un premier paquet, qui va être comparé avec un paquet P2 de monitoring. Le procédé comprend en effet alors la génération par le module de traitement de données 11b de l'unité amont auxiliaire 10b du deuxième paquet P2 à partir des mêmes données de commande que le premier paquet P1, comme l'on voit sur la **figure 4a****.**

Selon une vérification simple, l'étape (e) évoquée précédemment comprend l'extraction du paquet P1 depuis la première trame T1 par le module de traitement de données 21a de l'au moins une unité amont auxiliaire 10b (on rappelle que précédemment il avait été décrit le fait que soit extrait à l'étape (e) le CRC E1 du paquet P1).

Une nouvelle comparaison, cette fois du premier paquet P1 et du deuxième paquet P2, peut être réalisée par le module de traitement de données 11b de l'unité amont auxiliaire 10b. L'intégrité de la transmission de données à l'unité aval principale 20a est alors confirmée seulement si la comparaison est positive, c'est-à-dire que P1 et P2 sont identiques, ce qui traduit que le paquet P1 transmis est correct.

Dans un mode de réalisation préféré, le procédé comprend des étapes supplémentaires, illustrées par les figures, pour réaliser une double vérification du paquet P1. Les étapes qui vont être à présent décrites peuvent être faites avant les étapes (a)-(i) évoquées précédemment, ou concomitamment. Il est à noter que le paquet P1 peut être généré deux fois, de sorte à une fois vérifier l'intégrité de la génération de données, puis une deuxième fois vérifier l'intégrité de la transmission de données. De façon préférée les deux tests sont imbriqués pour gagner du temps.

Dans une étape (α) (qui peut être simultanée avec l'étape (a), à laquelle elle est similaire), illustrée par la **figure 4b****,** est générée par le module de traitement de données 11b de l'unité amont auxiliaire 10b une quatrième trame T4 comprenant le deuxième paquet P2 et un code de redondance cyclique E2 dudit deuxième paquet P2. On a donc T4=P2+E2. Cette trame T4 (qui doit normalement être identique à la première trame T1) est transmise au module d'interface 12b de l'unité amont auxiliaire 10b.

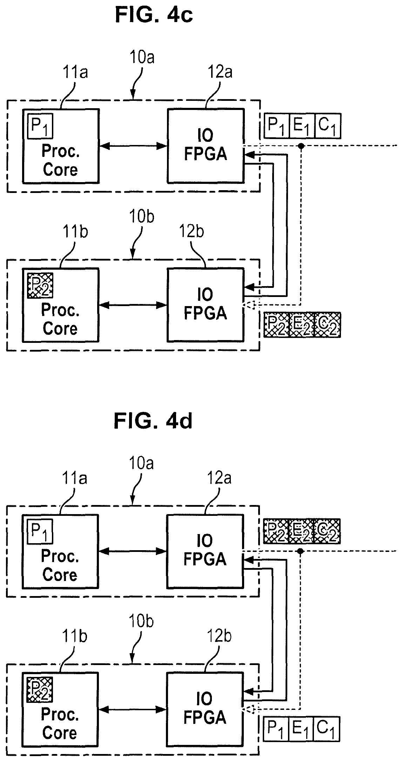

Dans une étape (β) (qui peut être simultanée avec l'étape (b), à laquelle elle est similaire) illustrée par la **figure 4c****,** ce module d'interface 12b encapsule la quatrième trame T4 dans une cinquième trame T5 (laquelle est à nouveau avantageusement conforme au format de la figure 2 décrit précédemment) comprenant en outre un code de redondance cyclique C2 de la quatrième trame T4. En d'autres termes, le champ de données de la cinquième trame T5 est composé du paquet P2 et du CRC E2 associé, et cette cinquième trame T5 doit normalement être identique à la seconde trame T2.

Dans une étape (γ) (qui peut être simultanée avec l'étape (c), à laquelle elle est similaire) illustrée par la **figure 4d****,** la cinquième trame T5 est transmise (soit via le même câblage, soit une liaison directe car tous les modules amont 10 sont disposés à proximité) au module d'interface 12a de l'unité amont principale 10a.

Le module d'interface 12a extrait dans une étape (δ) (qui peut être simultanée avec l'étape (d), à laquelle elle est similaire) la quatrième trame T4 depuis la cinquième trame T5 (en isolant l'identifiant de la trame et le CRC C2) et la transmet au module de traitement de données 11a associé.

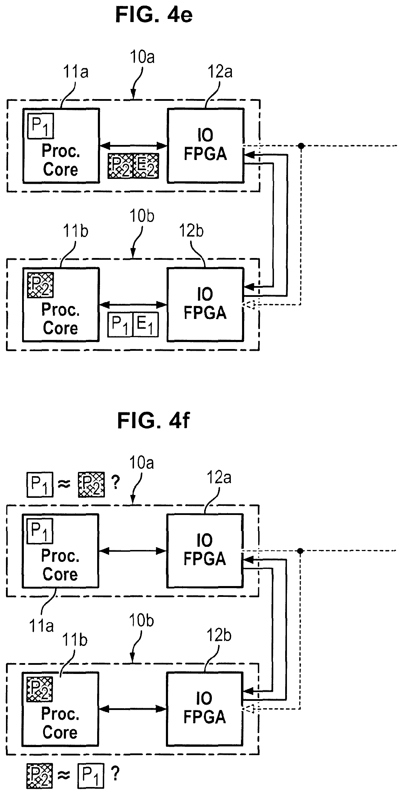

Le module de traitement de données 11a de l'unité amont principale 10a extrait alors dans une étape (ε) (qui peut être simultanée avec l'étape (e), à laquelle elle est similaire) représentée par la **figure 4e** le deuxième paquet P2 depuis la quatrième trame T4.

Ce dernier dispose alors des deux versions du paquet à transmettre (le premier paquet P1 extrait de la première trame T1 et sa copie P2 extrait de la quatrième trame T4) et peut les comparer dans une étape (ζ) (qui peut être simultanée avec la comparaison au niveau du module de traitement de données 11b de l'unité amont auxiliaire 10b, évoquée précédemment, à laquelle elle est similaire) représentée par la **figure 4f****.** L'intégrité de la transmission de données à l'unité amont auxiliaire 10b est confirmée seulement si la comparaison est positive, en d'autres termes que le paquet P1 et le paquet P2 sont identiques, ce qui est signe que la génération de chacun de ces paquets (à partir des mêmes données) s'est bien déroulée. A ce stade, le module de traitement de données 11a de l'unité amont principale 10a peut être sûr que le paquet P1 a été généré (et par conséquent transmis) sans erreur.

### Calculateur FCC et système FCS

Selon un deuxième aspect, l'invention concerne un calculateur de vol 1 de type FCC, en d'autres termes une « ligne » comprenant une unité amont principale 10a, une unité aval principale 20a et au moins une unité amont auxiliaire 10b (et avantageusement au moins une unité aval auxiliaire 20b), les unités étant configurées pour mettre en oeuvre le procédé selon le premier aspect.

Les unités 10a, 10b, 20a, 20b d'une même ligne 1 sont comme expliqué physiquement connectées via une unique liaison filaire, en particulier une liaison filaire est conforme au standard RS-485.

Selon un troisième aspect l'invention concerne un système de contrôle de vol (du type FCS) d'un aéronef (en particulier un hélicoptère), comprenant au moins trois calculateurs 1.1, 1.2, 1.3 selon le deuxième aspect, de sorte à obtenir une architecture du type de celle de la figure 1.

Les unités amont 10a, 10b des calculateurs 1.1, 1.2, 1.3 reçoivent des données de commande de vol depuis au moins un organe de pilotage de l'aéronef (manche, palonnier, etc.), et les unités aval 20a, 20b des calculateurs 1.1, 1.2, 1.3 fournissent des instructions de contrôle à au moins un actuateur de l'aéronef (vérins actionnant les gouvernes etc.). De façon préférée chaque unité amont 10a, 10b d'un calculateur 1.1, 1.2, 1.3 est connectée aux unités aval 20a, 20b des autres calculateurs 1.1, 1.2, 1.3 et/ou toutes les unités amont 10a, 10b des calculateurs 1.1, 1.2, 1.3 (respectivement toutes les unités aval 20a, 20b des calculateurs 1.1, 1.2, 1.3) sont connectées entre elles.

L'aéronef comprend ainsi le système de contrôle de vol, les organes de pilotage et les actionneurs.

### Produit programme d'ordinateur

Selon un troisième et un quatrième aspects, l'invention concerne un produit programme d'ordinateur comprenant des instructions de code pour l'exécution (en particulier sur les moyens de traitement de données 11a, 11b, 21a, 21b des unités) du procédé de vérification d'intégrité de transmission de données entre une unité amont principale 10a et une unité aval principale 20a, ainsi que des moyens de stockage lisibles par un équipement informatique (notamment une mémoire des unités) sur lequel on trouve ce produit programme d'ordinateur.

## Revendications

1. Procédé de vérification d'intégrité de transmission de données entre une unité amont principale (10a) et une unité aval principale (20a), le procédé étant **caractérisé en ce qu'**il comprend la mise en oeuvre d'étapes de :
(a) Génération par un module de traitement de données (11a) de l'unité amont principale (10a) d'une première trame (T1) comprenant un paquet (P1) de données à transmettre et un code de redondance cyclique (E1) dudit paquet (P1), et transmission à un module d'interface (12a) de l'unité amont principale (10a) ;
(b) Encapsulation par ledit module d'interface (12a) de l'unité amont principale (10a) de la première trame (T1) dans une seconde trame (T2) comprenant en outre un code de redondance cyclique (C1) de la première trame (T1) ;
(c) Transmission de la seconde trame (T2) à des modules d'interface (22a, 12b) de l'unité aval principale (20a) et d'au moins une unité amont auxiliaire (10b) ;
(d) Extraction de la première trame (T1) depuis la seconde trame (T2) par les modules d'interface (22a, 12b) de l'unité aval principale (20a) et de l'au moins une unité amont auxiliaire (10b) ; et transmission à des module de traitement de données (21a, 11b) de l'unité aval principale (20a) et de l'au moins une unité amont auxiliaire (10b) ;
(e) Extraction du paquet (P1) depuis la première trame (T1) par le module de traitement de données (21a) de l'unité aval principale (20a) ; et extraction du code de redondance cyclique (E1) du paquet (P1) par le module de traitement de données (21a) de l'au moins une unité amont auxiliaire (10b) ;
(f) Encapsulation par ledit module d'interface (12a) de l'unité amont principale (10a) du code de redondance cyclique (E1) du paquet (P1) dans une troisième trame (T3) ;
(g) Transmission de la troisième trame au module d'interface (12b) de l'au moins une unité amont auxiliaire (10b) ;
(h) Extraction du code de redondance cyclique (E1) du paquet (P1) depuis la troisième trame (T3) par le modules d'interface (12b) de l'au moins une unité amont auxiliaire (10b) ; et transmission au module de traitement de données (11b) de l'au moins une unité amont auxiliaire (10b) ;
(i) Comparaison par le module de traitement de données (11b) de l'au moins une unité amont auxiliaire (10b) de chacun des codes de redondance cyclique (E1) extraits de la première trame (T1) et de la troisième trame (T3) ; et confirmation de l'intégrité de la transmission de données à l'unité aval principale (20a) seulement si la comparaison est positive.

2. Procédé selon la revendication 1, dans lequel l'étape (c) comprend également la transmission de la seconde trame (T2) au module d'interface (22b) d'au moins une unité aval auxiliaire (20b) ; l'étape (d) comprend l'extraction de la première trame (T1) depuis la seconde trame (T2) par le module d'interface (22b) de l'au moins une unité aval auxiliaire (20b) et la transmission à un module de traitement de données (21b) de l'au moins une unité aval auxiliaire (20b) ; et l'étape (e) comprend l'extraction du paquet (P1) depuis la première trame (T1) par le module de traitement de données (21b) de l'au moins une unité aval auxiliaire (20b).

3. Procédé selon la revendication 2, comprenant une étape supplémentaire (j) de transmission du paquet (P1) extrait par le module de traitement de données (21b) de l'au moins une unité aval auxiliaire (20b) au module de traitement de données (21a) de l'unité aval principale (20a) ; de comparaison par le module de traitement de données (21a) de l'unité aval principale (20a) de chacun des paquets (P1) reçus, et de confirmation de l'intégrité de la transmission de données à l'unité aval principale (20a) seulement si la comparaison est positive.

4. Procédé selon l'une des revendications précédentes, dans lequel le paquet (P1) à transmettre est un premier paquet, généré par le module de traitement de données (11a) de l'unité amont principale (10a) à partir de données de commande, l'étape (e) comprenant l'extraction du paquet (P1) depuis la première trame (T1) par le module de traitement de données (21a) de l'au moins une unité amont auxiliaire (10b) ; et le procédé comprenant en outre la génération par le module de traitement de données (11b) de l'au moins une unité amont auxiliaire (10b) d'un deuxième paquet (P2) à partir des mêmes données de commande que le premier paquet (P1) ; la comparaison par le module de traitement de données (11b) de l'au moins une unité amont auxiliaire (10b) du premier paquet (P1) et du deuxième paquet (P2) ; et la confirmation de l'intégrité de la transmission de données à l'unité aval principale (20a) seulement si la comparaison est positive.

5. Procédé selon l'une des revendications précédentes, comprenant la mise en oeuvre d'étapes de :
(α) Génération par le module de traitement de données (11b) de l'au moins une unité amont auxiliaire (10b) d'une quatrième trame (T4) comprenant le deuxième paquet (P2) et un code de redondance cyclique (E2) dudit deuxième paquet (P2), et transmission au module d'interface (12b) de l'au moins une unité amont auxiliaire (10b) ;
(β) Encapsulation par ledit module d'interface (12b) de l'au moins une unité amont auxiliaire (10b) de la quatrième trame (T4) dans une cinquième trame (T5) comprenant en outre un code de redondance cyclique (C2) de la quatrième trame (T4) ;
(γ) Transmission de la cinquième trame (T5) au module d'interface (12a) de l'unité amont principale (10a) ;
(δ) Extraction de la quatrième trame (T4) depuis la cinquième trame (T5) par le module d'interface (12a) de l'unité amont principale (10a), et transmission au module de traitement de données (11a) de l'unité amont principale (10a) ;
(ε) Extraction du deuxième paquet (P2) depuis la quatrième trame (T4) par le module de traitement de données (11a) de l'unité amont principale (20a) ;
(ζ) Comparaison par le module de traitement de données (11a) de l'unité amont principale (10a) du premier paquet (P1) et du deuxième paquet (P2) ; et confirmation de l'intégrité de la transmission de données à l'unité aval principale (20a) seulement si la comparaison est positive.

6. Procédé selon l'une des revendications précédentes, dans lequel les deuxième et troisième trames (T2, T3) sont conformes au standard High-Level Data Link Control (HDLC).

7. Procédé selon l'une des revendications précédentes, dans lequel les unités amont (10a, 10b) et les unités aval (20a, 20b) sont physiquement connectées via une unique liaison filaire.

8. Procédé selon la revendication 7, dans lequel ladite liaison filaire est conforme au standard RS-485.

9. Calculateur de vol (1) comprenant une unité amont principale (10a), une unité aval principale (20a) et au moins une unité amont auxiliaire (10b), les unités étant configurées pour mettre en oeuvre le procédé selon l'une des revendications précédentes.

10. Système de contrôle de vol d'un aéronef, comprenant au moins trois calculateurs (1.1, 1.2, 1.3) selon la revendication 9, les unités amont (10a, 10b) des calculateurs (1.1, 1.2, 1.3) recevant des données de commande de vol depuis au moins un organe de pilotage de l'aéronef, et les unités aval (20a, 20b) des calculateurs (1.1, 1.2, 1.3) fournissant des instructions de contrôle à au moins un actuateur de l'aéronef.

11. Système selon la revendication 10, dans lequel chaque unité amont (10a, 10b) d'un calculateur (1.1, 1.2, 1.3) est connectée aux unités aval (20a, 20b) des autres calculateurs (1.1, 1.2, 1.3).

12. Produit programme d'ordinateur comprenant des instructions de code pour l'exécution d'un procédé selon l'une des revendications 1 à 8 de vérification d'intégrité de transmission de données entre une unité amont principale (10a) et une unité aval principale (20a).

13. Moyens de stockage lisibles par un équipement informatique sur lesquels un produit programme d'ordinateur comprend des instructions de code pour l'exécution d'un procédé selon l'une des revendications 1 à 8 de vérification d'intégrité de transmission de données entre une unité amont principale (10a) et une unité aval principale (20a).

## Patentansprüche

1. Verfahren zur Verifizierung der Integrität von Datenübertragungen zwischen einer Upstream-Haupteinheit (10a) und einer Downstream-Haupteinheit (20a), wobei das Verfahren **dadurch gekennzeichnet ist, dass** es die Umsetzung von Schritten umfasst des:
(a) Generierens eines ersten Frames (T1), umfassend ein zu übertragendes Datenpaket (P1) und einen zyklischen Redundanzcode (E1) des genannten Pakets (P1) durch ein Datenverarbeitungsmodul (11a) der Upstream-Haupteinheit (10a) und Übertragung auf ein Schnittstellenmodul (12a) der Upstream-Haupteinheit (10a);
(b) Verkapselung der Upstream-Haupteinheit (10a) des ersten Frames (T1) in einem zweiten Frame (T1), umfassend darüber hinaus eine zyklische Redundanz (C1) des ersten Frames (T1), durch das genannte Schnittstellenmodul (12a);
(c) Übertragung des zweiten Frames (T2) auf Schnittstellenmodule (22a, 12b) der Downstream-Haupteinheit (20a) und wenigstens einer Upstream-Nebeneinheit (10b);
(d) Extraktion des ersten Frames (T1) aus dem zweiten Frame (T2) durch Schnittstellenmodule (22a, 12b) der Downstream-Haupteinheit (20a) und der wenigstens einen Upstream-Nebeneinheit (10b); und Übertragung auf Datenverarbeitungsmodule (21a, 11b) der Downstream-Haupteinheit (20a) und der wenigstens einen Upstream-Nebeneinheit (10b);
(e) Extraktion des Pakets (P1) von dem ersten Frame (T1) durch das Datenverarbeitungsmodul (21a) der Downstream-Haupteinheit (20a); und Extraktion des zyklischen Redundanzcodes (E1) des Pakets (P1) durch das Datenverarbeitungsmodul (21a) der wenigstens einen Upstream-Nebeneinheit (10b);
(f) Verkapselung der Upstream-Haupteinheit (10a) des zyklischen Redundanzcodes (E1) des Pakets (P1) in einem dritten Frame (T3) durch das genannte Schnittstellenmodul (12a);
(g) Übertragung des dritten Frames auf das Schnittstellenmodul (12b) der wenigstens einen Upstream-Nebeneinheit (10b);
(h) Extraktion des zyklischen Redundanzcodes (E1) des Pakets (P1) ausgehend von dem dritten Frame (T3) durch das Schnittstellenmodul (12b) der wenigstens einen Upstream-Nebeneinheit (10b); und Übertragung der wenigstens einen Upstream-Nebeneinheit (10b) auf das Datenübertragungsmodul (11b);
(i) Vergleich jedes der zyklischen Redundanzcodes (E1), die aus dem ersten Frame (T1) und dem dritten Frame (T3) extrahiert sind, durch das Datenverarbeitungsmodul (11b) der wenigstens einen Upstream-Nebeneinheit (10b); und Bestätigung der Integrität der Datenübertragung auf die Downstream-Haupteinheit (20a) nur, wenn der Vergleich positiv ist.

2. Verfahren gemäß Anspruch 1, bei dem der Schritt (c) ebenfalls die Übertragung des zweiten Frames (T2) auf das Schnittstellenmodul (22b) wenigstens einer Downstream-Nebeneinheit (20b) umfasst; der Schritt (d) umfasst die Extraktion des ersten Frames (T1) aus dem zweiten Frame (T2) durch das Schnittstellenmodul (22b) der wenigstens einen Downstream-Nebeneinheit (20b) und die Übertragung auf ein Datenverarbeitungsmodul (21b) der wenigstens einen Downstream-Nebeneinheit (20b); und der Schritt (e) umfasst die Extraktion des Pakets (P1) aus dem ersten Frame (T1) durch das Datenverarbeitungsmodul (21b) der wenigstens einen Downstream-Nebeneinheit (20b).

3. Verfahren gemäß Anspruch 2, umfassend einen zusätzlichen Schritt (j) des Übertragung des Pakets (P1), das durch das Datenverarbeitungsmodul (21b) der wenigstens einen Downstream-Nebeneinheit (20b) extrahiert ist, auf das Datenverarbeitungsmodul (21a) der Downstream-Haupteinheit (20a); des Vergleichs jedes der empfangenen Pakete (P1) durch das Datenverarbeitungsmodul (21a) der Downstream-Haupteinheit (20a) und der Bestätigung der Integrität der Datenübertragung auf die Downstream-Nebeneinheit (20a) nur, wenn der Vergleich positiv ist.

4. Verfahren gemäß einem der voranstehenden Ansprüche, bei dem das zu übertragende Paket (P1) ein erstes Paket ist, das durch das Datenverarbeitungsmodul (11a) der Upstream-Haupteinheit (10a) ausgehend von Steuerdaten generiert ist, wobei der Schritte (e) die Extraktion des Pakets (P1) ausgehend von dem ersten Frame (T1) durch das Datenverarbeitungsmodul (21a) der wenigstens einen Downstream-Nebeneinheit (10b) umfasst; und wobei das Verfahren darüber hinaus das Generieren eines zweiten Pakets (P2) ausgehend von denselben Steuerdaten wie bei dem ersten Paket (P1) durch das Datenverarbeitungsmodul (11b) der wenigstens einen Downstream-Nebeneinheit (10b); den Vergleich des ersten Pakets (P1) und des zweien Pakets (P2) durch das Datenverarbeitungsmodul (11b) der wenigstens einen Upstream-Nebeneinheit (10b); und die Bestätigung der Integrität der Datenverarbeitung auf die Downstream-Haupteinheit (20a) nur, wenn der Vergleich positiv ist, umfasst.

5. Verfahren gemäß einem der voranstehenden Ansprüche, umfassend die Umsetzung der Schritte des:
(α) Generierens eines vierten Frames (T4), umfassend das zweite zu übertragende Datenpaket (P2) und einen zyklischen Redundanzcode (E2) des genannten zweiten Pakets (P2) durch das Datenverarbeitungsmodul (11a) der wenigstens einen Downstream-Nebeneinheit (10a) und Übertragung auf ein Schnittstellenmodul (12b) der wenigstens einen Downstream-Nebeneinheit (10b);
(β) Verkapselung der wenigstens einen Upstream-Nebeneinheit (10b) des vierten Frames (T4) durch das genannte Schnittstellenmodul (12b) in einem fünften Frame (T5), umfassend darüber hinaus einen zyklischen Redundanzcode (C2) des vierten Frames (T4);
(γ) Übertragung des fünften Frames (T5) auf das Schnittstellenmodul (12a) der Upstream-Haupteinheit (10a);
(δ) Extraktion des vierten Frames (T4) ausgehend von dem fünften Frame (T5) durch das Schnittstellenmodul (12a) der Upstream-Haupteinheit (10a) und Übertragung auf das Datenverarbeitungsmodul (11a) der Upstream-Haupteinheit (10a);
(ε) Extraktion des zweiten Pakets (P2) ausgehend von dem vierten Frame (T4) durch das Datenverarbeitungsmodul (11a) der Upstream-Haupteinheit (20a) ;
(ζ) Vergleich des ersten Pakets (P1) und des zweiten Pakets (P2) durch das Datenverarbeitungsmodul (11a) der Upstream-Haupteinheit (10a); und Bestätigung der Integrität der Datenübertragung auf die Downstream-Nebeneinheit (20a) nur, wenn der Vergleich positiv ist.

6. Verfahren gemäß einem der voranstehenden Ansprüche, bei dem die zweiten und dritten Frames (T2, T3) dem Standard High-Level Data Link Control (HDLC) entsprechen.

7. Verfahren gemäß einem der voranstehenden Ansprüche, bei dem die Upstream-Einheiten (10a, 10b) und die Downstream-Einheiten (20a, 20b) physisch über eine einzige Drahtverbindung angeschlossen sind.

8. Verfahren gemäß Anspruch 7, bei dem die genannte Drahtverbindung dem Standard RS-485 entspricht.

9. Flugwegrechner (1), umfassend eine Upstream-Haupteinheit (10a), eine Downstream-Haupteinheit (20a) und wenigstens eine Upstream-Nebeneinheit (10b), wobei die Einheiten konfiguriert sind, um das Verfahren gemäß einem der voranstehenden Ansprüche umzusetzen.

10. Flugsteuerverfahren eines Luftfahrzeugs, umfassend wenigstens drei Rechner (1.1, 1.2, 1.3) gemäß Anspruch 9, wobei die Upstream-Einheiten (10a, 10b) der Rechner (1.1, 1.2, 1.3) Flugsteuerdaten ausgehend von wenigstens einem Steuerorgan des Luftfahrzeugs umfassen und die Downstream-Einheiten (20a, 20b) der Rechner (1.1, 1.2, 1.3) Steueranweisungen an wenigstens ein Stellelement des Luftfahrzeugs liefern.

11. System gemäß Anspruch 10, bei dem jede Upstream-Einheit (10a, 10b) eines Rechners (1.1, 1.2, 1.3) an die Downstream-Einheiten (20a, 20b) der anderen Rechner (1.1, 1.2, 1.3) angeschlossen ist.

12. Computerprogrammprodukt, umfassend Codeanweisungen für die Ausführung eines Verfahrens gemäß einem der Ansprüche 1 bis 8 zur Verifizierung der Integrität von Datenübertragungen zwischen einer Upstream-Haupteinheit (10a) und einer Downstream-Haupteinheit (20a).

13. Durch eine Haupteinheit lesbare Speichermittel, auf denen ein Computerprogrammprodukt Codeanweisungen für die Ausführung eines Verfahrens gemäß einem der Ansprüche 1 bis 8 zur Verifizierung der der Integrität von Datenübertragungen zwischen einer Upstream-Haupteinheit (10a) und einer Downstream-Haupteinheit (20a) umfasst.

## Claims

1. Method for verifying the integrity of data transmission between a main upstream unit (10a) and a main downstream unit (20a), the method being **characterized in that** it comprises implementing the steps of:
(a) Generation, by a data processing module (11a) of the main upstream unit (10a), of a first frame (T1) comprising a data packet (P1) to be transmitted and a cyclic redundancy code (E1) of said packet (P1), and transmission to an interface module (12a) of the main upstream unit (10a);
(b) Encapsulation, by said interface module (12a) of the main upstream unit (10a), of the first frame (T1) in a second frame (T2) also including a cyclic redundancy code (C1) of the first frame (T1);
(c) Transmission of the second frame (T2) to interface modules (22a, 12b) of the main downstream unit (20a) and of at least one auxiliary upstream unit (10b);
(d) Extraction of the first frame (T1) from the second frame (T2) by the interface modules (22a, 12b) of the main downstream unit (20a) and of the at least one auxiliary upstream unit (10b); and transmission to data processing modules (21a, 11b) of the main downstream unit (20a) and of the at least one auxiliary upstream unit (10b);
(e) Extraction of the packet (P1) from the first frame (T1) by the data processing module (21a) of the main downstream unit (20a); and extraction of the cyclic redundancy code (E1) of packet (P1) by the data processing module (21a) of the at least one auxiliary upstream unit (10b);
(f) Encapsulation, by said interface module (12a) of the main upstream unit (10a), of the cyclic redundancy code (E1) of packet (P1) in a third frame (T3);
(g) Transmission of the third frame to the interface module (12b) of the at least one auxiliary upstream unit (10b);
(h) Extraction of the cyclic redundancy code (E1) of packet (P1) from the third frame (T3) by the interface module (12b) of the at least one auxiliary upstream unit (10b); and transmission to the data processing module (11b) of the at least one auxiliary upstream unit (10b);
(i) Comparison by the data processing module (11b) of the at least one auxiliary upstream unit (10b) of each of the cyclic redundancy codes (E1) extracted from the first frame (T1) and from the third frame (T3); and confirmation of the integrity of data transmission to the main downstream unit (20a) only if comparison is positive.

2. The method according to claim 1, wherein step (c) also comprises the transmission of the second frame (T2) to the interface module (22b) of at least one auxiliary downstream unit (20b); step (d) comprises extraction of the first frame (T1) from the second frame (T2) by the interface module (22b) of the at least one auxiliary downstream unit (20b) and transmission to a data processing module (21b) of the at least one auxiliary downstream unit (20b) ; and step (e) comprises extraction of packet (P1) from the first frame (T1) by the data processing module (21b) of the at least one auxiliary downstream unit (20b).

3. The method according to claim 2, comprising an additional step (j) of transmission of the packet (P1), extracted by the data processing module (21b) of the at least one auxiliary downstream unit (20b), to the data processing module (21a) of the main downstream unit (20a) ; comparison, by the data processing module (21a) of the main downstream unit (20a), of each of received packets (P1), and confirmation of the integrity of data transmission to the main downstream unit (20a) only if comparison is positive.

4. The method according to one of the preceding claims, wherein the packet (P1) to be transmitted is a first packet generated from control data by the data processing module (11a) of the main upstream unit (10a), step (e) comprising extraction of packet (P1) from the first frame (T1) by the data processing module (21a) of the at least one auxiliary upstream unit (10b); and the method further comprising generation by the data processing module (11b) of the at least one auxiliary upstream unit (10b) of a second packet (P2) from the same control data as the first packet (P1) ; comparison, by the data processing module (11b) of the at least one auxiliary upstream unit (10b), of the first packet (P1) and second packet (P2); and confirmation of the integrity of data transmission to the main downstream unit (20a) only if comparison is positive.

5. The method according to one of the preceding claims, comprising the implementing of steps of:
(α) Generation, by the data processing module (11b) of the at least one auxiliary upstream unit (10b) of a fourth frame (T4) comprising the second packet (P2) and a cyclic redundancy code (E2) of said second packet (P2), and transmission to the interface module (12b) of the at least one auxiliary upstream unit (10b);
(β) Encapsulation, by said interface module (12b) of the at least one auxiliary upstream unit (10b), of the fourth frame (T4) in a fifth frame (T5) also including a cyclic redundancy code (C2) of the fourth frame (T4);
(γ) Transmission of the fifth frame (T5) to the interface module (12a) of the main upstream unit (10a);
(δ) Extraction of the fourth frame (T4) from the fifth frame (T5) by the interface module (12a) of the main upstream unit (10a), and transmission to the data processing module (11a) of the main upstream unit (10a);
(ε) Extraction of the second packet (P2) from the fourth frame (T4) by the data processing module (11a) of the main upstream unit (20a);
(ζ) Comparison, by the data processing module (11a) of the main upstream unit (10a), of the first packet (P1) and second packet (P2); and confirmation of the integrity of data transmission to the main downstream unit (20a) only if comparison is positive.

6. The method according to one of the preceding claims, wherein the second and third frames (T2, T3) conform to the High-Level Data Link Control (HDLC) standard.

7. The method according to one of the preceding claims, wherein the upstream units (10a, 10b) and downstream units (20a, 20b) are physically connected via a single wire link.

8. The method according to claim 7, wherein said wire link conforms to standard RS-485.

9. A flight computer (1) comprising a main upstream unit (10a), a main downstream unit (20a) and at least one auxiliary upstream unit (10b), the units being configured to implement the method according to one of the preceding claims.

10. An aircraft flight control system comprising at least three computers (1.1, 1.2, 1.3) according to claim 9, the upstream units (10a, 10b) of the computer (1.1, 1.2, 1.3) receiving flight control data from at least one aircraft piloting component, and the downstream units (20a, 20b) of the computers (1.1, 1.2, 1.3) giving control instructions to at least one aircraft actuator.

11. The system according to claim 10, wherein each upstream unit (10a, 10b) of a computer (1.1, 1.2, 1.3) is connected to the downstream units (20a, 20b) of the other computers (1.1, 1.2, 1.3).

12. Computer program product comprising code instructions to execute a method according to one of claims 1 to 8 for verification the integrity of data transmission between a main upstream unit (10a) and a main downstream unit (20a).

13. Storage means readable by computer equipment in which a computer program product comprises code instructions to execute a method according to one of claims 1 to 8 for verifying the integrity of data transmission between a main upstream unit (10a) and main downstream unit (20a).
